# EUROPEAN PATENT SPECIFICATION

(11) **EP 2 278 442 B1**
(45) Date of publication and mention of the grant of the patent: **10.05.2017**
(21) Application number: 10168905.7
(22) Date of filing: 08.07.2010
(51) Int. Cl.: G06F 3/041, G06F 3/044, B60K 35/00, B60K 37/06

(54) **Touch input device with error prevention**
Berührungseingabevorrichtung mit Fehlervorbeugung
Dispositif de saisie tactile avec prévention d'erreur

(30) Priority: 09.07.2009 JP 2009162985
(43) Date of publication of application: 26.01.2011
(73) Proprietor: ALPS ELECTRIC CO., LTD., Tokyo 145-8501 (JP)
(72) Inventor: Takahashi, Akihiro, Tokyo Tokyo 145-8501 (JP)
(74) Representative: Klunker . Schmitt-Nilson . Hirsch

(56) References cited:
- WO-A2-2009/047437
- CN-A- 1 305 157
- JP-A- 2004 273 409
- JP-A- 2008 273 224
- US-A- 4 497 977
- US-A- 4 630 867
- US-A1- 2004 095 335

## Description

### BACKGROUND OF THE INVENTION

### 1. Field of the Invention

The present invention relates to an in-vehicle input device and, in particular, relates to a technique for stabilizing an operation of a detection unit that electrically detects an operation by a user.

### 2. Description of the Related Art

A vehicle is mounted with various devices to be operated, for example, a car air-conditioner, a car audio system, and a car navigation system. In some cases, a touch panel is used as an input device for operating these devices. The touch panel is a single-unit combination of an information display screen and an operation unit, serving as an information input unit. A user touches the display screen with a finger or a dedicated pen to input information. The touch panel can provide various screens as information input screens by switching a screen displayed on the display screen to another one.

As a sensor for detecting a touch by a user's finger in the touch panel, for example, a capacitance sensor is used. The capacitance sensor measures a capacitance. As an example of application of the capacitance sensor to the touch panel, sensor elements are arranged in a grid pattern on the rear of the panel surface which is slightly charged and the position of a touch by the user is determined on the basis of states of detection by the sensor elements.

Such a capacitance sensor has a disadvantage in that missed detection or erroneous detection is caused by static electricity charged on a human body. For example, assuming that the amount of charges built up on the user's body is small, when the user touches the panel surface, charges accumulated on a portion touched by the user are appropriately discharged, so that the capacitance sensor can detect a change in charges. Whereas, assuming that the amount of charges on the user's body is large, even when the user touches the panel surface, charges on the panel surface may not be appropriately discharged because the difference in potential between the user's finger and the panel surface is small. This results in missed detection or erroneous detection. It is therefore desirable to appropriately discharge charges accumulated on a human body in a vehicle.

As for a method of preventing a human body in a vehicle from being charged, there has been proposed a method of removing charges on a human body using a conductive material placed on, for example, the seating surface of a seat (refer to Japanese Unexamined Patent Application Publication No. 8-191750, for example). The method disclosed in Japanese Unexamined Patent Application Publication No. 8-191750 is intended to prevent a human body (user) in a vehicle from being charged but is not based on the assumption that the user operates an input device, such as a touch panel, though the present invention is based on this assumption. Accordingly, the intention of the above method differs from that of the present invention. US 2004/095335 A1 discloses a touch panel for a display device having a conductive layer on an upper surface wherein static electricity is discharged to a top case. WO 2009/047437 A2 shows a control panel for onboard instruments with a touch field and CN 1 305 157 A discloses a notebook with a conductive frame around the screen.

The problem to be solved is to provide a new and ergonomic input device avoiding the drawbacks known from prior art. This problem is solved with the features of claim 1. preferred embodiments are subject of the depending claims.

In the method disclosed in Japanese Unexamined Patent Application Publication No. 8-191750, charges on the human body (user) are discharged through a conducting portion provided for the seating surface of the seat. However, the method is little effective for charges in the vicinity of a user's hand operating a touch panel because of various influences, e.g., the resistance of the human body and user's clothes. According to this method, it is therefore difficult to overcome the above-described disadvantage, i.e., missed detection or erroneous detection caused by static electricity on the human body.

The present invention has been made in consideration of the above-described circumstances in the related art. The present invention provides an in-vehicle input device that prevents missed detection or erroneous detection caused by charges on a human body.

The present invention provides an in-vehicle Input device according to claim 1.

With this configuration, since the hand of the user operating the operation unit is come into contact with the conducting member connected to the system ground, charges built up on the user's hand are discharged. Advantageously, missed detection or erroneous detection caused by charges on a human body can be prevented in the in-vehicle input device.

The conducting member may be made of metal and be positioned adjacent to the operation unit. Advantageously, the user's hand in contact with the conducting member is brought into conduction with the system ground, so that charges can be appropriately discharged.

Preferably, the conducting member is placed in a position where the user puts a hand when operating the operation unit with a finger. Since the user puts the hand on the conducting member unconsciously or spontaneously, charges can be appropriately discharged.

The conducting member may include a mesh of linear conductors. This configuration also allows the user's hand in contact with the conducting member to be brought into conduction with the system ground, so that charges can be appropriately discharged.

The conducting member may be configured as a protrusion that is positioned adjacent to the operation unit and protrudes farther than an operation surface of the operation unit so as to serve as a guide for a finger of the user operating the operation unit. This configuration also allows part of the user's hand to be inevitably come into contact with the conducting member, so that charges can be appropriately discharged.

The conducting member may be a portion formed by plating a frame on which the operation unit is mounted. Consequently, the conducting member can be disposed without causing disfigurement of the device.

According to the present invention, missed detection or erroneous detection caused by charges on a human body can be prevented in the in-vehicle input device.

### BRIEF DESCRIPTION OF THE DRAWINGS

FIG. 1 is a perspective view of a portion of a car, the portion including an input device according to an embodiment of the present invention;
FIG. 2 is a perspective view of an area around the input device according to the embodiment of the present invention;
FIG. 3 is a perspective view of the area around the input device according to the embodiment of the present invention;
FIG. 4 is a block diagram illustrating the functional configuration of the input device according to the embodiment of the present invention;
FIG. 5 is a block diagram illustrating the functional configuration of the input device according to the embodiment of the present invention;
FIG. 6 is a perspective view of an area around an input device according to another embodiment of the present invention;
FIG. 7 is a perspective view of an area around an input device according to another embodiment of the present invention;
FIG. 8 is a perspective view of a portion of a car, the portion including an input device according to another example of the present invention;
FIG. 9 is a perspective view of an area around an input device according to the example of the present invention;
FIG. 10 is a cross-sectional view of the input device according to the example of the present invention; and
FIG. 11 is a cross-sectional view of the input device according to the example of the present invention.

### DESCRIPTION OF THE PREFERRED EMBODIMENTS

### First Embodiment

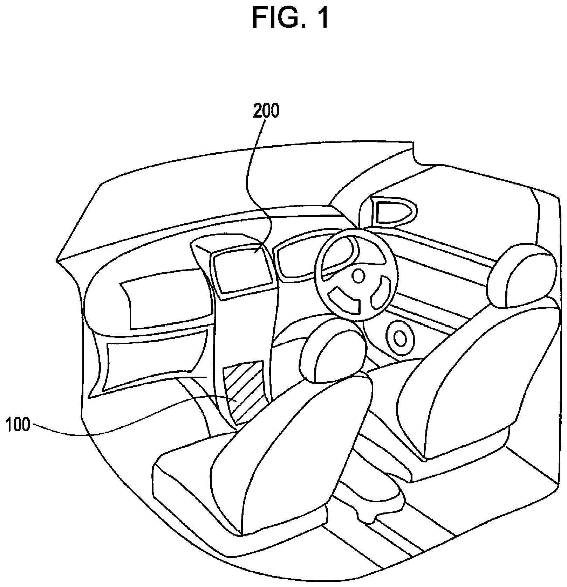

An in-vehicle input device according to a first embodiment of the present invention will be described with reference to the drawings. FIG. 1 is a diagram illustrating an area around seats of a car equipped with the input device according to the present embodiment. Referring to FIG. 1, the input device, indicated at 100, according to this embodiment is positioned adjacent to the seating surfaces of the seats so that a person on the seat can operate the device in the car. Specifically, the input device 100 is installed in a position corresponding to, for example, a vehicle center console below the lower edge of a windshield of the car so that the input device 100 can be operated by both of persons sitting on the adjacent right and left seats, as illustrated in FIG. 1.

In addition to the input device 100, the car according to the present embodiment includes a display unit 200, as illustrated in FIG. 1. The display unit 200 is shared by in-vehicle devices operated by the input device 100. The input device 100 according to this embodiment is positioned below the display unit 200 and is located in front of a portion between the seating surfaces of the adjacent right and left seats so that each of the persons sitting on the seats can hand-operate the input device 100. Although the adjacent right and left seats are a driver seat and a passenger seat in this embodiment, the embodiment may be applied to rear right and left seats.

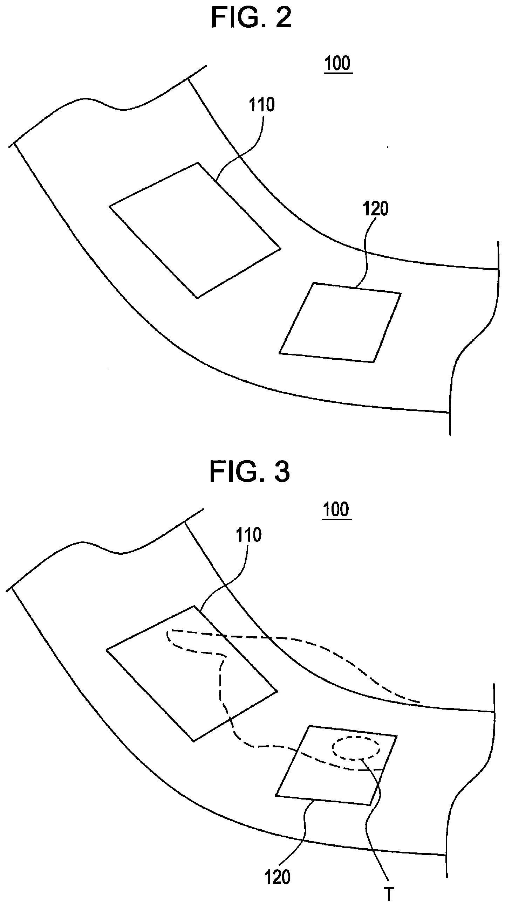

The input device 100 according to the present embodiment will be described in detail with reference to FIG. 2. FIG. 2 is an enlarged view of a portion including the input device 100 in FIG. 1. Referring to FIG. 2, the input device 100 according to the present embodiment includes an input unit 110 and a conducting member 120. The input unit 110 is a touch panel that is a single-unit combination of display means, such as a liquid crystal display (LCD), and detection means, such as a sensor, for detecting a touch.

Although the input device 100 which includes the display means as a touch panel can be combined with the display unit 200 in a single unit, it is preferred to arrange the input device 100 and the display unit 200 separately. The separate arrangement can prevent a display screen of the display unit 200 from being contaminated with fingerprints or the like, thus preventing a reduction in visibility.

As the detection means for detecting a user's operation, namely, an operation position in the input unit 110 according to the present embodiment, capacitance sensor type means is used. In the capacitance sensor type position detection means, a weak electric field is produced over the whole of a display panel of the input unit 110, i.e., a display screen which is exposed as illustrated in FIG. 2 and charges on the display screen are discharged through a user's finger touching the screen. This results in a change in surface charge of the portion touched by the user's finger. An operation position is detected on the basis of the change. In the capacitance-sensor touch panel, if a user's finger touching the panel is charged, charges on the display screen are not appropriately discharged, thus causing missed detection or erroneous detection. The present embodiment is intended to prevent such missed detection or erroneous detection.

The conducting member 120 is provided in a position where the user inevitably puts his or her hand when operating the input unit 110 and is brought into conduction with the user's hand. Accordingly, the conducting member 120 is made of a low resistance material. In this embodiment, the conducting member 120 is made of an aluminum plate. FIG. 3 illustrates the position of a user's hand upon operating the input unit 110. In FIG. 3, the user's hand is indicated by a dashed line. Referring to FIG. 3, when a user's finger touches the display screen of the input unit 110, the palm is in contact with a touch portion T of the conducting member 120. Thus, charges on the user's hand are discharged through the conducting member 120.

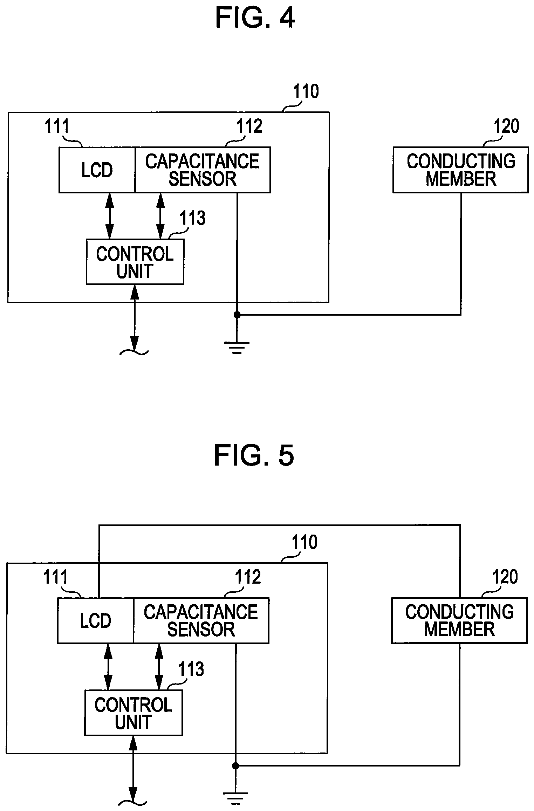

The functional configuration of the input device 100 according to the present embodiment will now be described with reference to FIG. 4. As described above, the input device 100 according to this embodiment includes the input unit 110 and the conducting member 120. In this embodiment, the input unit 110 includes an LCD 111, a capacitance sensor 112, and a control unit 113. The LCD 111 serves as an operation surface exposed in FIGs. 2 and 3, also serves as a display unit for displaying an operation screen under the control of the control unit 113, and further functions as an operation unit through which the user operates the input unit 110.

The capacitance sensor 112 is combined with the LCD 111 in a single unit. As described above, the capacitance sensor 112 detects a position where the user touches the display screen of the LCD 111. Specifically, the capacitance sensor 112 functions as an operation detection unit that electrically detects a user's touch on the display screen of the LCD 111. The control unit 113 acquires a result of detection by the capacitance sensor 112 and processes the detection result as operation information. The capacitance sensor 112 is connected to system ground, as illustrated in FIG. 4. As the system ground in the present embodiment, for example, a frame of the car can be used. Accordingly, a reference potential of the capacitance sensor 112 is stabilized, so that a user's touch on the surface of the LCD 111 can be properly detected.

The control unit 113 is a controller that controls the LCD 111 and the capacitance sensor 112. The control unit 113 recognizes an operation by the user on the basis of a result of detection by the capacitance sensor 112 and a screen displayed on the LCD 111, namely, the configuration of the operation screen, and processes the recognized operation as operation information. The control unit 113 is connected to other devices, such as a car air-conditioner, a car audio system, and a car navigation system, to be operated through the input device 100. The control unit 113 outputs the above-described processed operation information to any of the above devices.

As described above, the conducting member 120 discharges charges on the user's hand touching the surface of the LCD 111. As illustrated in FIG. 4, the conducting member 120 is electrically connected to the system ground for the capacitance sensor 112. Thus, the user's hand operating the LCD 111 is brought into conduction with and connected to the system ground for the capacitance sensor 112 through the conducting member 120, so that the potential of the user's hand is the same as that of the system ground. Consequently, when a user's finger touches the surface of the LCD 111, charges on a touched portion of the LCD 111 are discharged through the system ground for the capacitance sensor 112, so that the charges are immediately discharged. In addition, charges on the touched portion of the LCD 111 are discharged through the system ground, thus stabilizing a change in potential when the LCD 111 is touched. Consequently, missed detection or erroneous detection in the input unit 110 can be prevented.

FIG. 5 illustrates an electrical state when the user operates the input unit 110. When a user's hand touches the surface of the LCD 111 while being in contact with the conducting member 120, as illustrated in FIG. 3, a touched portion of the LCD 111 is electrically connected to the conducting member 120 through the user's hand. Consequently, charges on the touched portion of the surface of the LCD 111 are discharged to the system ground through the user's hand and the conducting member 120, so that the potential of the user's hand is the same as that of the system ground. The capacitance sensor 112 detects a change in charges in the touched portion.

As described above, in the input device 100 according to the present embodiment, the conducting member is placed in the vicinity of the input unit 110 including the touch panel such that the conducting member is come into contact with part of a user's hand when the user operates the touch panel. The conducting member is electrically connected to the system ground for the capacitance sensor which functions as detection means for the touch panel. Thus, since the potential of the user's hand operating the touch panel is the same as that of the system ground at any time, missed detection or erroneous detection caused by charges on a human body can be prevented.

In this embodiment, the case where the capacitance sensor type detection means is used as means for detecting the position of an operation by the user has been described as an example. This embodiment can be applied to another method in which charges on a human body may cause missed detection or erroneous detection, thus obtaining the same advantages as those described above.

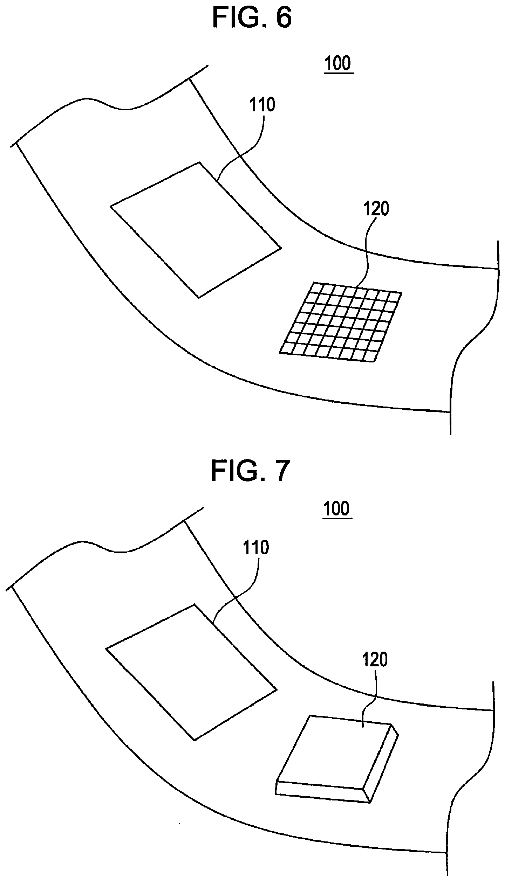

In this embodiment, the case where the conducting member 120 is made of an aluminum plate has been described as an example. The conducting member 120 may include a mesh component composed of conductor lines, as illustrated in FIG. 6. In addition, the conducting member 120 can be formed by plating a mold provided for the relevant portion. As for a kind of plating, for example, chromium plating may be performed.

In this embodiment, the case where the conducting member 120 is disposed in a plane has been described as an example. The conducting member 120 may be raised, as illustrated in FIG. 7, in consideration of ease of hand placement upon operating the input unit 110. Consequently, when the user operates the input unit 110, the user puts his or her hand on the conducting member 120 more spontaneously, so that the purpose of the present invention can be more easily achieved. Furthermore, the conducting member 120 may be made of a soft material so that the member serves as a hand rest. Consequently, as well as described above, the user puts his or her hand on the conducting member 120 more spontaneously, so that the purpose of the present invention can be more easily achieved.

As illustrated in FIGs. 4 and 5, the capacitance sensor 112 is connected to the conducting member 120 and is then connected to the system ground. This means that the capacitance sensor 112 and the conducting member 120 have only to be commonly grounded. It is unnecessary to connect the capacitance sensor 112 to the conducting member 120 and then connect the capacitance sensor 112 to the system ground.

In the case where the system ground is the frame of the car body as described above, it is unnecessary to connect the capacitance sensor 112 and the conducting member 120 to the same portion of the frame. The capacitance sensor 112 and the conducting member 120 may be connected to different portions of the frame. In this case, so long as the car body frame is made of conductive metal, these components are at the same potential. The conducting member 120 can be connected to the system ground in common with the capacitance sensor 112. Thus, the same advantages as those described above can be obtained.

In the case where the conducting member 120 is connected to the system ground, e.g., the car body frame, so long as the conducting member 120 is fixed to the frame by a conductor, such as a screw, without providing a new conductor line, two purposes, namely, fixing and conduction can be achieved by a single component. In addition, in the case where the conducting member 120 is formed by plating the mold as described above, so long as plating is performed such that a portion subjected to plating includes a portion where the conducting member 120 is fixed to the car body frame, the conduction between the conducting member 120 and the system ground can be easily made.

### Another Example

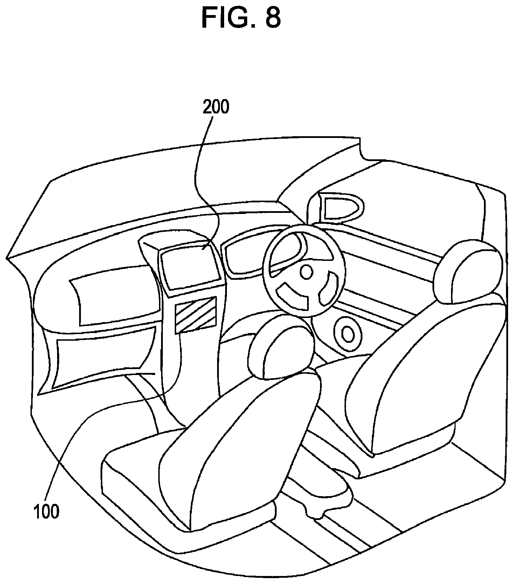

In the first embodiment, the input device 100 in the form as illustrated in FIG. 2 has been described as an example. In another example , an input device 100 in another form will be described. Components designated by the same reference numerals as those in the first embodiment are the same as or correspond to those in the first embodiment and detailed explanation thereof are omitted. FIG. 8 is a diagram illustrating an area in the vicinity of seats of a car equipped with the input device according to the present example and corresponds to FIG. 1 depicting the first embodiment. Referring to FIG. 8, the input device, indicated at 100, according to the present example is placed upper than the position in the first embodiment and is positioned just below a display unit 200.

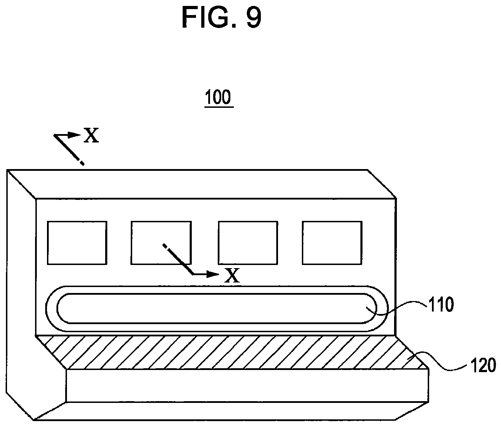

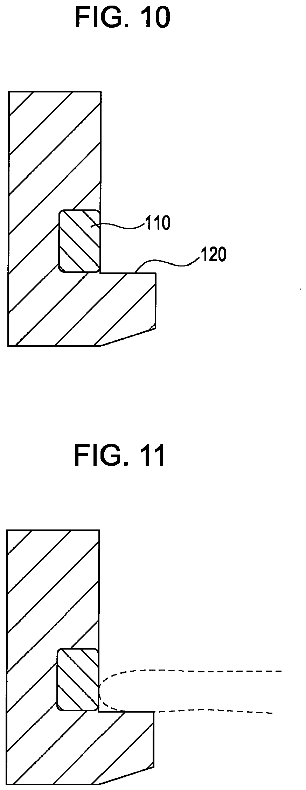

FIG. 9 is an enlarged view of a portion including the input device 100 in FIG. 8 and corresponds to FIG. 2 depicting the first embodiment. FIG. 10 is a cross-sectional view taken along the line X-X in FIG. 9. Referring to FIG. 9, the input device 100 according to the present example also includes an input unit 110 and a conducting member 120. Different from the first embodiment, the input unit 110 according to the present example is not configured as a touch panel but includes only a capacitance sensor.

The input unit 110 in the first embodiment includes the panel surface. The user touches a portion on the panel surface, so that the user can perform an operation according to the display state. In other words, an operation range of the input unit 110 in the first embodiment is located in a two-dimensional area. On the contrary, the input unit 110 according to the present example has a horizontally oriented operation surface, as illustrated in FIG. 9. The operation range extends in the plane but can be substantially regarded as extending in one dimension. Accordingly, when the user operates the input unit 110, the level of a user's finger is substantially the same as that of the input unit 110. With the above-described configuration of the input unit 110, the conducting member 120 according to the present example functions as a guide for the user's finger.

Referring to FIGs. 9 and 10, the conducting member 120 according to the present example is disposed on a protrusion which is located under the input unit 110 such that the protrusion is adjacent to the input unit 110. Specifically, the conducting member 120 is a portion formed by plating one surface, located adjacent to the input unit 110, of the surfaces of the protrusion. The surface on which the conducting member 120 is placed serves as the surface in contact with the user's finger in the above-described guide function.

FIG. 11 illustrates a case where the user operates the input device 100 in a state illustrated in FIG. 10. In FIG. 11, the user's finger is indicated by a dashed line. As described above, the conducting member 120 functions as the guide for the user's finger and the user touches the operation surface of the input unit 110 while being in contact with the conducting member 120. Consequently, according to the present example, when the user operates the input unit 110, charges built up on a user's hand are discharged through the conducting member 120, so that the potential of the hand is the same as that of the system ground.

As described above, in the input device 100 according to the present example, the input unit 110 is substantially configured one-dimensionally and the conducting member 120 is disposed on one surface of the protrusion located adjacent to the input unit 110 such that the surface is adjacent to the input unit 110. When the user touches the input unit 110, the protrusion is used as a guide for a user's finger. Thus, the potential of the user's finger is the same as that of the system ground. Advantageously, missed detection or erroneous detection caused by charges on a human body can be prevented.

In this example, the case where the conducting member 120 is formed by plating the protrusion provided adjacent to the input unit 110 has been described as an example.
Alternatively, the protrusion may be made of a conductive material. Thus, the same advantages as those described above can be obtained.

In this example, the case where the input unit 110 includes only the capacitance sensor has been described as an example. However, the input unit 110 may be configured as a touch panel in the same manner as the first embodiment. In this case, as described above, the input unit 110 is configured as an operation surface substantially having a one-dimensional operation range, so that the conducting member 120 can be used as a guide and the potential of the user's finger can be allowed to reach the same value as that of the system ground.

The above-described embodiments have been described with respect to the input device for various operations of the car air-conditioner, the car audio system, and the car navigation system. The present invention is not limited to the embodiments but can also be applied to an input device for operating an in-vehicle device.

## Claims

1. An in-vehicle input device (100) comprising:
an operation unit (110) that a user operates to input information;
an operation detection unit (112) that electrically detects an operation on the operation unit (110); and
a conducting member (120) positioned in the vicinity of the operation unit (110) such that the member is come into contact with part of a hand of the user when the user operates the operation unit (110),
wherein the conducting member (120) is electrically connected to system ground for the operation detection unit (112);
the conducting member (120) is placed in a position where the user puts a hand when operating the operation unit (110) with a finger; **characterized in that** the conducting member (120) being provided separate from the operating unit (110) at such a distance to the operating unit (110) that when the user's finger touches the display screen of the operation unit (110), the user's palm is in contact with a touch portion (T) of the conducting member (120).

2. The input device (100) according to claim 1, wherein the conducting member (120) is made of metal and is positioned adjacent to the operation unit (110).

3. The input device (100) according to claim 1 or 2, wherein the conducting member (120) includes a mesh of linear conductors.

4. The input device (100) according to any one of claims 1 to 3, wherein the conducting member (120) is a portion subjected to plating includes a portion where the conducting member (120) is fixed to the car body frame.

## Patentansprüche

1. In einem Fahrzeug vorgesehene Eingabevorrichtung (100), aufweisend:
eine Betätigungseinheit (110), die ein Nutzer betätigt, um Information einzugeben;
eine Betätigungs-Detektionseinheit (112), die eine Betätigung an der Betätigungseinheit (110) elektrisch detektiert; und
ein leitendes Element (120), das in der Nähe der Betätigungseinheit (110) positioniert ist, so dass das Element mit einem Teil einer Hand des Nutzers in Kontakt kommt, wenn der Nutzer die Betätigungseinheit (110) betätigt,
wobei das leitende Element (120) mit System-Masse für die Betätigungs-Detektionseinheit (112) elektrisch verbunden ist;
wobei das leitende Element (120) an einer Stelle platziert ist, an die der Nutzer eine Hand legt, wenn er die Betätigungseinheit (110) mit einem Finger betätigt;
**dadurch gekennzeichnet,**
**dass** das leitende Element (120) separat von der Betätigungseinheit (110) in einer derartigen Distanz von der Betätigungseinheit (110) vorgesehen ist, dass dann, wenn der Finger des Nutzers den Anzeigeschirm der Betätigungseinheit (110) berührt, die Handfläche des Nutzers mit einem Berührungsbereich (T) des leitenden Elements (120) in Kontakt ist.

2. Eingabevorrichtung (100) nach Anspruch 1,
wobei das leitende Element (100) aus Metall besteht und benachbart der Betätigungseinheit (110) angeordnet ist.

3. Eingabevorrichtung (100) nach Anspruch 1 oder 2,
wobei das leitende Element (120) ein Gitter aus linearen Leitern aufweist.

4. Eingabevorrichtung (100) nach einem der Ansprüche 1 bis 3,
wobei das leitende Element (120) ein einem Plattiervorgang unterzogener Bereich ist sowie einen Bereich beinhaltet, in dem das leitende Element (120) an dem Fahrzeugkarosserierahmen festgelegt ist.

## Revendications

1. Dispositif de saisie (100) à bord d'un véhicule, comprenant :
une unité de commande (110) qu'un utilisateur fait fonctionner pour saisir des informations ;
une unité de détection de commande (112) qui détecte électriquement une opération sur l'unité de commande (110) ; et
un élément conducteur (120) placé dans le voisinage de l'unité de commande (110), de manière à ce que l'élément entre en contact avec une partie d'une main de l'utilisateur, lorsque l'utilisateur fait fonctionner l'unité de commande (110),
sachant que l'élément conducteur (120) est connecté électriquement à la prise de masse du système pour l'unité de détection de commande (112) ;
sachant que l'élément conducteur (120) est placé dans une position où l'utilisateur pose une main lorsqu'il fait fonctionner l'unité de commande (110) avec un doigt ;
**caractérisé en ce que**
l'élément conducteur (120) est prévu séparément de l'unité de commande (110), à une distance par rapport à l'unité de commande (110) qui est telle que lorsque le doigt de l'utilisateur touche l'écran de visualisation de l'unité de commande (110), la paume de l'utilisateur est en contact avec une partie tactile (T) de l'élément conducteur (120).

2. Dispositif de saisie (100) selon la revendication 1, dans lequel l'élément conducteur (120) est en métal et est placé de façon contiguë à l'unité de commande (110).

3. Dispositif de saisie (100) selon la revendication 1 ou 2, dans lequel l'élément conducteur (120) comprend un réseau maillé de conducteurs linéaires.

4. Dispositif de saisie (100) selon l'une quelconque des revendications 1 à 3, dans lequel l'élément conducteur (120) est une partie soumise à un plaquage et comporte une partie où l'élément conducteur (120) est fixé au châssis de la voiture.
